# EUROPEAN PATENT SPECIFICATION

(11) **EP 3 978 157 B1**
(45) Date of publication and mention of the grant of the patent: **16.04.2025**
(21) Application number: 20382870.2
(22) Date of filing: 01.10.2020
(51) Int. Cl.: B21D 43/05, B21D 43/18, B65G 47/91

(54) **TRANSFER DEVICE**
ÜBERTRAGUNGSVORRICHTUNG
DISPOSITIF DE TRANSFERT

(43) Date of publication of application: 06.04.2022
(73) Proprietor: FAGOR ARRASATE, S.COOP., 20500 ARRASATE - MONDRAGON (ES)
(72) Inventor: SARASUA MARITXALAR, Oier, 20500 Arrasate - Mondragon (ES); SAINZ GOMEZ, Iban, 20500 Arrasate - Mondragon (ES)
(74) Representative: Igartua, Ismael

(56) References cited:
- WO-A1-96/26025
- DE-A1- 10 158 194
- DE-A1- 10 253 202

## Description

### TECHNICAL FIELD

The present invention relates to transfer devices, in particular to transfer devices for installations comprising a plurality of presses.

### PRIOR ART

Presses are used for forming sheet metals, to impart the required shape to them, by means of strokes of the press. In some cases, a plurality of pressing steps are required to obtain parts with the desired shape, so there are facilities comprising a plurality of presses. The presses may be of different types, such as mechanical, electrical, or hydraulic presses, for example, and all the presses in one and the same installation may be of the same type or may represent a combination of different types.

The part is arranged in a press for a pressing step, and once said step has concluded, it is taken to another press. This occurs until completing the entire process. Robotic arms or another type of devices known as transfer devices are used to transport the parts from one press to another. Precision in transporting the parts, and especially in how the part is seized in a press and how it is arranged in the next press, is extremely important so as to be able to obtain a flawless final part.

EP0685276A1 discloses a transfer device of an installation comprising a plurality of presses. The transfer device is configured for transporting parts from a first press to a second press, and comprises a crossbeam with a longitudinal axis, a first support attached to the crossbeam and comprising a plurality of suction devices and a second support attached to the crossbeam, located at a distance from the first support along the longitudinal axis of the crossbeam and comprising a plurality of suction devices. The transfer device comprises a first fixed structure and a second fixed structure arranged facing one another, a first carriage that can move along the first structure and is attached to a first end of the crossbeam and a second carriage that can move along the second structure and is attached to a second end of the crossbeam, such that the movement of one of the carriages relative to the other causes said crossbeam to rotate.

DE10253202A1 discloses a transfer device comprising a crossbeam with a longitudinal axis and with a plurality of suction devices to support a part to be transferred from a first point to a second point. The crossbeam can be rotated in order to adjust the position or orientation of said part as required.

### DISCLOSURE OF THE INVENTION

The object of the invention is to provide a transfer device of an installation comprising a plurality of presses, and a press installation, as defined in the claims.

The first aspect of the invention relates to a transfer device suitable for being used in a press installation comprising a plurality of presses and configured for transferring parts from a first press to a second press. The presses may be of different types, such as mechanical, electrical, or hydraulic presses, for example, and all the presses in one and the same installation may be of the same type or may represent a combination of different types.

The transfer device comprises:
- a crossbeam with a longitudinal axis;
- a first support attached to the crossbeam and comprising a plurality of suction devices; and
- a second support attached to the crossbeam, located at a distance from the first support along the longitudinal axis of the crossbeam and comprising a plurality of suction devices.

The parts to be transferred between presses are held by means of suction devices.

The transfer device further comprises:
- a main structure, and
- a first carriage and a second carriage horizontally located at a distance from one another and horizontally displaceable independently of one another along the main structure.

The crossbeam is attached to the first carriage with rotational freedom, and the transfer device comprises an arm attached to the second carriage with rotational freedom and to the crossbeam with rotational freedom. Said crossbeam is therefore attached to said second carriage through said arm. The arm is configured for rotating relative to the second carriage and relative to the crossbeam when said second carriage and/or the first carriage displace. The arm thereby allows the crossbeam to rotate relative to the attachment point for attaching said crossbeam to the first carriage, the desired rotation of said crossbeam relative to the said attachment point being able to be caused by controlling the displacement of the first carriage and/or of the second carriage. Furthermore, this displacement of the crossbeam is performed without having to compensate for the length of said crossbeam, which simplifies the transfer device and allows the transfer device to be more compact.

The longitudinal main structure comprises a first substructure and a second substructure horizontally located at a distance from one another, the first carriage being attached to the first substructure and the second carriage being attached to the second substructure, and the first carriage and the second carriage being horizontally located at a distance from one another.

In addition, the carriages are configured for being displacing horizontally along the same horizontal plane. Thanks to this fact the transfer device is compact as its height can be reduced in respect of other known transfer devices. This allows to reduce the required space for the transfer device between two facing mold of each press of the installation where the transfer device is used, the length of the mold to obtain said space being reduced. Therefore, the transfer device allows the reduction of said length, which implies less time for completing said required length and, consequently, an increase in the productivity of the machine being obtained.

A second aspect of the invention relates to a press installation comprising at least a first press, a second press, and a transfer device for transferring parts from the first press to the second press. The transfer device is a transfer device according to the first aspect of the invention, in any of its embodiments and/or configurations. The installation comprises the advantages discussed for the first aspect of the invention.

These and other advantages and features of the invention will become apparent in view of the figures and the detailed disclosure of the invention.

### DESCRIPTION OF THE DRAWINGS

Figure 1 shows an embodiment of a press installation according to the invention, with a first press, a second press, and a transfer device for transferring parts from the first press to the second press.
Figure 2 shows an embodiment of the transfer device according to the invention, with a part.
Figure 3 shows the transfer device of Figure 2, with a crossbeam of said transfer device rotated.
Figure 4 shows the transfer device of Figure 2, without elements of a main structure of said transfer device.
Figure 5 shows the transfer device of Figure 2, with a crossbeam of said transfer device rotated and without elements of a main structure of said transfer device.

### DETAILED DISCLOSURE OF THE INVENTION

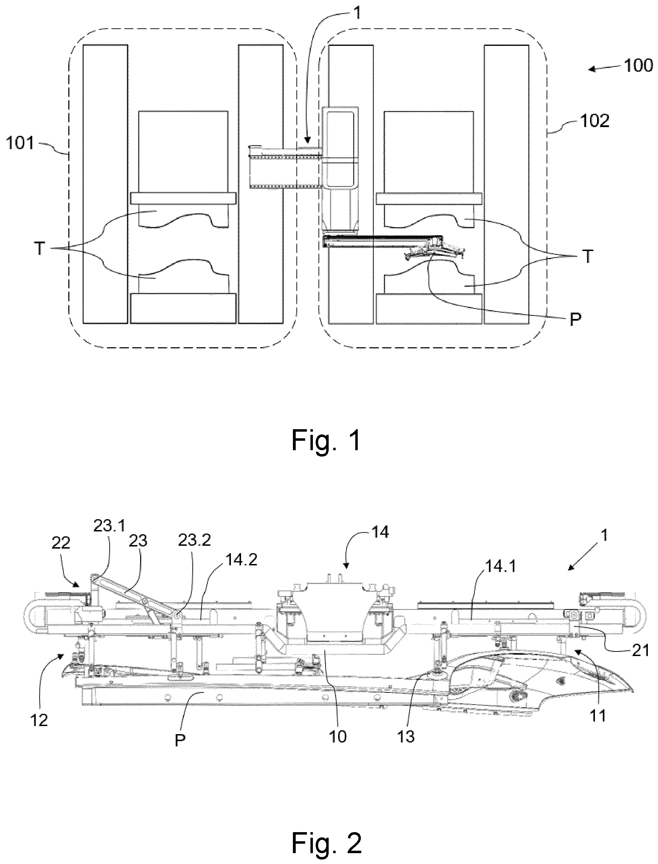

A first aspect of the invention relates to a transfer device 1 of an installation 100 comprising at least a first press 101 and a second press 102 and shown by way of example in Figure 1, but it may comprise more presses. The transfer device 1, depicted by way of example in Figures 2 to 5, is configured for transferring parts P from the first press 101 to the second press 102, and comprises at least:
- one crossbeam 10 with a longitudinal axis 10.0;
- a first part support 11 attached to the crossbeam 10 and comprising a plurality of suction devices 13; and
- a second part support 12 attached to the crossbeam 10, located at a distance from the first part support 11 along the longitudinal axis 10.0 of the crossbeam 10, and comprising a plurality of suction devices 13.

The suction devices 13 of both part supports 11 and 12 are used to hold the part P to be transferred from the first press 101 to the second press 102. Said part supports 11 and 12 are preferably attached to the crossbeam 10 in a removable manner, such that if the shape of the part P to be transferred varies, if needed both part supports 11 and 12 (or one of them, as required) can be replaced with part supports 11 and 12 having a different configuration and/or design and suited to the shape of the parts P to be transferred.

The transfer device 1 further comprises:
- a main structure 14;
- a first carriage 21 and a second carriage 22 horizontally located at a distance from one another and horizontally displaceable independently of one another along the main structure 14, the crossbeam 10 being attached to the first carriage 21 with rotational freedom; and
- an arm 23 attached to the second carriage 22 with rotational freedom at a first attachment point 23.1 of said arm 23, and attached to the crossbeam 10 with rotational freedom at a second attachment point 23.2 of said arm 23 located at a distance from the first attachment point 23.1, such that said crossbeam 10 is attached to said second carriage 22 through said arm 23.

The arm 23 is configured for rotating relative to the second carriage 22 and relative to the crossbeam 10 when said second carriage 22 and/or the first carriage 21 displace.

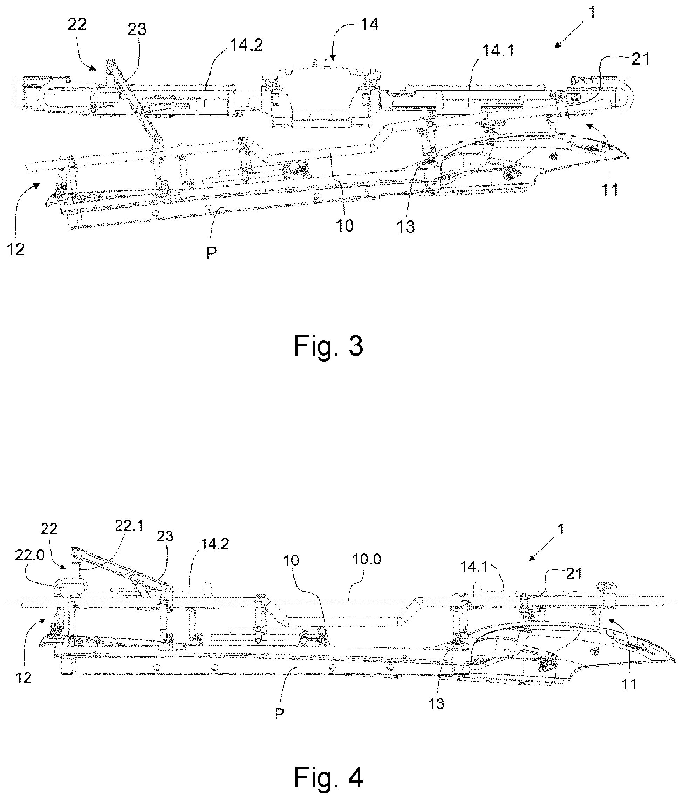

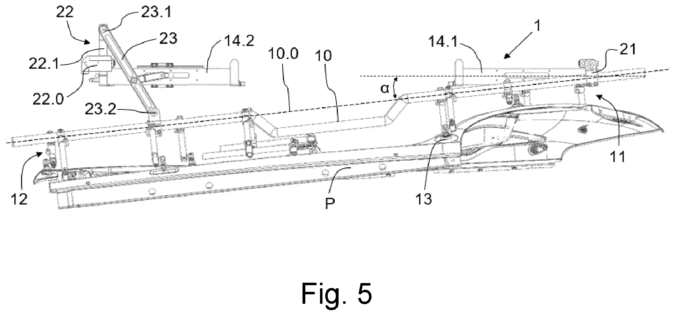

The arm 23 allows the crossbeam 10 to rotate relative to the attachment point between said crossbeam 10 and the first carriage 21, as shown in Figures 3 and 5, the desired rotation (the desired angle of rotation α relative to said attachment point) being able to be caused by controlling the horizontal displacement of the second carriage 22 and/or of the first carriage 21. Furthermore, as a result of the displacement possibilities of both carriages 21 and 22, this displacement of the crossbeam 10 is performed without having to compensate for the length of said crossbeam 10, unlike what occurs in the state of the art, a simpler and more compact transfer device 1 being obtained. The carriages 21 and 22 are configured for displacing horizontally along the same horizontal plane.

In a preferred embodiment, the second carriage 22 comprises a body 22.0 and an extension 22.1 protruding from the body 22.0 (preferably protruding vertically), the arm 23 being attached to said extension 22.1 at a point that is located at a distance at least vertically from the body 22.0. Said attachment is therefore located in a horizontal plane other than the horizontal plane where the attachment between the crossbeam 10 and the first carriage 21 is located, providing an eccentricity between the attachment of the first carriage 21 to the crossbeam 10 and the attachment of the second carriage 22 to said crossbeam 10, which allows the crossbeam 10 to rotate in a simple manner relative to the attachment point between said crossbeam 10 and the first carriage 21.

In the preferred embodiment, the arm 23 is attached to the end of the extension 22.1 of the second carriage 22 farthest away from the body 22.0 of said second carriage 22, such that the length of the extension 22.1 is the smallest length possible, and a more compact second carriage 22, and therefore a more compact transfer device 1, is achieved. The length therefore depends on the maximum eccentricity that is to be provided between the attachment of the first carriage 21 to the crossbeam 10 and the attachment of the second carriage 22 to said crossbeam 10.

The main structure 14 comprises a first substructure 14.1 and a second substructure 14.2 horizontally located at a distance from one another, the first carriage 21 being attached to the first substructure 14.1 and the second carriage 22 being attached to the second substructure 14.2. Both substructures 14.1 and 14.2 are arranged in the same horizontal plane (they are horizontally aligned), such that the carriages 21 and 22 are configured for displacing horizontally along the same horizontal plane.

The transfer device 1 preferably comprises a control device configured for causing the coordinated displacement of the first carriage 21 and of the second carriage 22, such that the part P can be arranged as required. The control device can be a specific device of the transfer device 1, or it can be a control device of the installation 100 in which said transfer device 1 is arranged. The control device may therefore comprise a microcontroller, a controller, a microprocessor, a processor, an FPGA, or any other device with computing capability.

As the parts P displace from one press to another, it is advantageous to position said part P in a specific position in each press to avoid later adjustments. The (upper and lower) dies T of each press are suitable for supporting a given positioning of said part P, generally taking a reference point of the part P, and for this reason an adjustment of said positioning was necessary up until if, after arranging the part P in a press, its position is not the required given position. Furthermore, said dies T may require the part P to be inclined, which may complicate the correct arrangement of said reference point of the part P, since an inclination may entail said reference point being displaced. The reference point of the part P preferably coincides with the dimensional center of said part P, but another point of said part P could be taken as a reference point if required. As a result, the control device of the proposed transfer device 1 is preferably configured for coordinating the displacement of the first carriage 21 and of the second carriage 22 so as to be able to correctly position the part P in the receiving press, in accordance with the inclination of the part P and the positioning of the reference point of said part P required by the dies T of said receiving press.

The required inclination implies a specific angle of rotation α for the crossbeam 10 (see Figures 3 and 5 by way of example), and the control device is configured for controlling the displacement of the carriages 21 and 22 in a coordinated manner in order to provide that angle of inclination α. When the angle of rotation α is other than zero, the resulting inclination implies a horizontal displacement of the reference point of the part P, so an additional adjustment of said part P is required in order to correctly position it in the receiving press. The control device is furthermore configured for simultaneously displacing the two carriages 21 and 22, and in the same direction, for displacing said reference point and taking it to the required position. Correct positioning of the part P in the corresponding press is thereby ensured with the proposed transfer device 1 in a simple manner, without requiring later adjustment.

In the preferred embodiment, the part supports 11 and 12 are arranged between the area of the crossbeam 10 attached to the first carriage 21 and the area of the crossbeam 10 attached to the second carriage 22.

A second aspect of the invention relates to a press installation 100, such as the one shown by way of example in Figure 1, comprising at least a first press 101, a second press 102, and a transfer device 1 for transferring parts P from the first press 101 to the second press 102. The transfer device 1 is a transfer device according to the first aspect of the invention, in any of its embodiments and/or configurations. The installation 100 therefore comprises a different configuration and/or embodiment based on the configuration and/or embodiment of the transfer device 1 it comprises.

The main structure 14 of the transfer device 1 extends at least between the first press 101 and the second press 102, being able to be at least partially integrated in the first press 101 and/or in the second press 102. In some embodiments, the main structure 14 comprises a first substructure 14.1 and a second substructure 14.2 horizontally located at a distance from one another, the first substructure 14.1 being closer to said first press 101 than the second substructure 14.2 and the second press 102 being closer to said second press 102 than the first substructure 14.1. Furthermore, the first substructure 14.1 can be at least partially integrated in the first press 101, and the second substructure 14.2 can be at least partially integrated in the second press 102.

## Claims

1. Transfer device of an installation comprising a plurality of presses, the transfer device (1) being configured for transferring parts (P) from a first press (101) to a second press (102) and said transfer device (1) comprising a crossbeam (10) with a longitudinal axis (10.0); a longitudinal main structure (14); a first carriage (21) and a second carriage (22) horizontally displaceable independently of one another along the main structure (14), the crossbeam (10) being attached to the first carriage (21) with rotational freedom; and an arm (23) attached to the second carriage (22) with rotational freedom at a first attachment point (23.1) of said arm (23) and attached to the crossbeam (10) with rotational freedom at a second attachment point (23.2) of said arm (23) located at a distance from the first attachment point (23.1), such that said crossbeam (10) is attached to said second carriage (22) through said arm (23), said arm (23) being configured for rotating relative to the second carriage (22) and relative to the crossbeam (10) when the first carriage (21) and/or said second carriage (22) displace, **characterized in that** the transfer device (1) comprises a first part support (11) attached to the crossbeam (10) and comprising a plurality of suction devices (13), and a second part support (12) attached to the crossbeam (10), located at a distance from the first part support (11) along the longitudinal axis (10.0) of the crossbeam (10) and comprising a plurality of suction devices (13), the longitudinal main structure (14) comprising a first substructure (14.1) and a second substructure (14.2) horizontally located at a distance from one another and arranged in a same horizontal plane, the first carriage (21) being attached to the first substructure (14.1) and the second carriage (22) being attached to the second substructure (14.2), the first carriage (21) and the second carriage (22) being horizontally located at a distance from one another, and being configured for displacing horizontally along the same horizontal plane.

2. Transfer device according to claim 1, wherein the second carriage (22) comprises a body (22.0) and an extension (22.1) protruding from the body (22.0), the arm (23) being attached to said extension (22.1) such that said attachment is in a horizontal plane other than the horizontal plane where the attachment between the crossbeam (10) and the first carriage (21) is located.

3. Transfer device according to claim 2, wherein the extension (22.1) of the second carriage (22) protrudes vertically from the body (22.0).

4. Transfer device according to claim 2 or 3, wherein the arm (23) is attached to the end of the extension (22.1) of the second carriage (22) farthest away from the body (22.0) of said second carriage (22).

5. Transfer device according to any of claims 1 to 4, comprising a control device configured for causing the coordinated displacement of the first carriage (21) and of the second carriage (22).

6. Transfer device according to any of claims 1 to 5, wherein the part supports (11, 12) are arranged between the area of the crossbeam (10) attached to the first carriage (21) and the area of the crossbeam (10) attached to the second carriage (22).

7. Transfer device according to any of claims 1 to 6, wherein the part supports (11, 12) are attached to the crossbeam (10) in a removable manner.

8. Press installation comprising at least a first press, a second press, and a transfer device (1) for transferring parts (P) from the first press (101) to the second press (102), **characterized in that** the transfer device (1) is a transfer device according to any of claims 1 to 7.

9. Installation according to claim 8, wherein the main structure (14) of the transfer device (1) extends at least between the first press (101) and the second press (102).

10. Installation according to claim 9, wherein the first substructure (14.1) is closer to the first press (101) than the second substructure (14.2) and the second substructure (14.2) is closer to the second press (102) than the first substructure (14.1).

11. Installation according to claim 10, wherein the first substructure (14.1) is at least partially integrated in the first press (101) and/or the second substructure (14.2) is at least partially integrated in the second press (102).

## Patentansprüche

1. Transfervorrichtung einer Einrichtung, umfassend eine Vielzahl von Pressen, wobei die Transfervorrichtung (1) zum Transferieren von Teilen (P) von einer ersten Presse (101) zu einer zweiten Presse (102) konfiguriert ist und die Transfervorrichtung (1) einen Querträger (10) mit einer Längsachse (10.0); eine Längshauptstruktur (14); einen ersten Schlitten (21) und einen zweiten Schlitten (22), die unabhängig voneinander entlang der Hauptstruktur (14) horizontal verschiebbar sind, wobei der Querträger (10) mit Rotationsfreiheit an dem ersten Schlitten (21) angebracht ist; und einen Arm (23) umfasst, der an dem zweiten Schlitten (22) mit Rotationsfreiheit an einem ersten Befestigungspunkt (23.1) des Arms (23) angebracht ist und an dem Querträger (10) mit Rotationsfreiheit an einem zweiten Befestigungspunkt (23.2) des Arms (23) angebracht ist, der sich in einem Abstand von dem ersten Befestigungspunkt (23.1) befindet, so dass der Querträger (10) über den Arm (23) an dem zweiten Schlitten (22) angebracht ist, wobei der Arm (23) dazu konfiguriert ist, sich relativ zu dem zweiten Schlitten (22) und relativ zu dem Querträger (10) zu drehen, wenn der erste Schlitten (21) und/oder der zweite Schlitten (22) verschoben werden, **dadurch gekennzeichnet, dass** die Transfervorrichtung (1) einen ersten Teilträger (11), der an dem Querträger (10) angebracht ist und eine Vielzahl von Saugvorrichtungen (13) umfasst, und einen zweiten Teilträger (12) umfasst, der an dem Querträger (10) angebracht ist, sich in einem Abstand von dem ersten Teilträger (11) entlang der Längsachse (10.0) des Querträgers (10) befindet und eine Vielzahl von Saugvorrichtungen (13) umfasst, wobei die Längshauptstruktur (14) eine erste Unterstruktur (14.1) und eine zweite Unterstruktur (14.2) umfasst, die sich horizontal in einem Abstand voneinander befinden und in einer gleichen horizontalen Ebene angeordnet sind, wobei der erste Schlitten (21) an der ersten Unterstruktur (14.1) angebracht ist und der zweite Schlitten (22) an der zweiten Unterstruktur (14.2) angebracht ist, wobei sich der erste Schlitten (21) und der zweite Schlitten (22) horizontal in einem Abstand voneinander befinden und für eine horizontale Verschiebung entlang der gleichen horizontalen Ebene konfiguriert sind.

2. Transfervorrichtung nach Anspruch 1, wobei der zweite Schlitten (22) einen Körper (22.0) und eine von dem Körper (22.0) vorstehende Verlängerung (22.1) umfasst, wobei der Arm (23) an der Verlängerung (22.1) derart angebracht ist, dass sich die Anbringung in einer horizontalen Ebene befindet, die sich von der horizontalen Ebene unterscheidet, in der sich die Anbringung zwischen dem Querträger (10) und dem ersten Schlitten (21) befindet.

3. Transfervorrichtung nach Anspruch 2, wobei die Verlängerung (22.1) des zweiten Schlittens (22) vertikal von dem Körper (22.0) vorsteht.

4. Transfervorrichtung nach Anspruch 2 oder 3, wobei der Arm (23) an dem Ende der Verlängerung (22.1) des zweiten Schlittens (22) angebracht ist, das am weitesten von dem Körper (22.0) des zweiten Schlittens (22) entfernt ist.

5. Transfervorrichtung nach einem der Ansprüche 1 bis 4, umfassend eine Steuervorrichtung, die dazu konfiguriert ist, die koordinierte Verschiebung des ersten Schlittens (21) und des zweiten Schlittens (22) zu bewirken.

6. Transfervorrichtung nach einem der Ansprüche 1 bis 5, wobei die Teilträger (11, 12) zwischen dem Bereich des Querträgers (10), der an dem ersten Schlitten (21) angebracht ist, und dem Bereich des Querträgers (10), der an dem zweiten Schlitten (22) angebracht ist, angeordnet sind.

7. Transfervorrichtung nach einem der Ansprüche 1 bis 6, wobei die Teilträger (11, 12) in abnehmbarer Weise an dem Querträger (10) angebracht sind.

8. Presseneinrichtung, umfassend mindestens eine erste Presse, eine zweite Presse und eine Transfervorrichtung (1) zum Transferieren von Teilen (P) von der ersten Presse (101) zu der zweiten Presse (102), **dadurch gekennzeichnet, dass** die Transfervorrichtung (1) eine Transfervorrichtung nach einem der Ansprüche 1 bis 7 ist.

9. Einrichtung nach Anspruch 8, wobei sich die Hauptstruktur (14) der Transfervorrichtung (1) mindestens zwischen der ersten Presse (101) und der zweiten Presse (102) erstreckt.

10. Einrichtung nach Anspruch 9, wobei die erste Unterstruktur (14.1) näher an der ersten Presse (101) ist als die zweite Unterstruktur (14.2) und die zweite Unterstruktur (14.2) näher an der zweiten Presse (102) ist als die erste Unterstruktur (14.1).

11. Einrichtung nach Anspruch 10, wobei die erste Unterstruktur (14.1) mindestens teilweise in die erste Presse (101) integriert ist und/oder die zweite Unterstruktur (14.2) mindestens teilweise in die zweite Presse (102) integriert ist.

## Revendications

1. Dispositif de transfert d'une installation comprenant une pluralité de presses, le dispositif de transfert (1) étant configuré pour transférer des pièces (P) à partir d'une première presse (101) vers une deuxième presse (102) et ledit dispositif de transfert (1) comprenant une traverse (10) avec une axe longitudinal (10.0) ; une structure principale longitudinale (14) ; un premier chariot (21) et un deuxième chariot (22) pouvant se déplacer en horizontal indépendamment l'un de l'autre le long de la structure principale (14), la traverse (10) étant attachée au premier chariot (21) avec liberté de rotation ; et un bras (23) attaché au deuxième chariot (22) avec liberté de rotation dans un premier point d'attache (23.1) dudit bras (23) et attaché à la traverse (10) avec liberté de rotation dans un deuxième point d'attache (23.2) dudit bras (23) situé à distance du premier point d'attache (23.1), de sorte que ladite traverse (10) est attachée audit deuxième chariot (22) par le biais dudit bras (23), ledit bras (23) étant configuré pour tourner par rapport au deuxième chariot (22) et par rapport à la traverse (10) lorsque le premier chariot (21) et/ou ledit deuxième chariot (22) se déplacent, **caractérisé en ce que** le dispositif de transfert (1) comprend un premier support de pièces (11) attaché à la traverse (10) et comprenant une pluralité de dispositifs d'aspiration (13), et un deuxième support de pièces (12) attaché à la traverse (10), situé à distance du premier support de pièces (11) le long de l'axe longitudinal (10.0) de la traverse (10) et comprenant une pluralité de dispositifs d'aspiration (13), la structure principale longitudinale (14) comprenant une première sous-structure (14.1) et une deuxième sous-structure (14.2) situées horizontalement à distance l'une de l'autre et disposées dans un même plan horizontal, le premier chariot (21) étant attaché à la première sous-structure (14.1) et le deuxième chariot (22) étant attaché à la deuxième sous-structure (14.2), le premier chariot (21) et le deuxième chariot (22) étant situés horizontalement et à distance l'un de l'autre, et étant configurés pour se déplacer en horizontal le long du même plan horizontal.

2. Dispositif de transfert selon la revendication 1, dans lequel le deuxième chariot (22) comprend un corps (22.0) et une extension (22.1) faisant sailli à partir du corps (22.0), le bras (23) étant attaché à ladite extension (22.1) de sorte que ledit attache se trouve dans un plan horizontal autre que le plan horizontal où se trouve l'attache entre la traverse (10) et le premier chariot (21).

3. Dispositif de transfert selon la revendication 2, dans lequel l'extension (22.1) du deuxième chariot (22) fait saillie verticalement à partir du corps (22.0).

4. Dispositif de transfert selon la revendication 2 ou 3, dans lequel le bras (23) est attaché à l'extrémité de l'extension (22.1) du deuxième chariot (22) plus éloignée du corps (22.0) dudit deuxième chariot (22).

5. Dispositif de transfert selon l'une quelconque des revendications 1 à 4, comprenant un dispositif de commande configuré pour provoquer le déplacement coordonné du premier chariot (21) et du deuxième chariot (22).

6. Dispositif de transfert selon l'une quelconque des revendications 1 à 5, dans lequel les supports de pièces (11, 12) sont disposés entre la zone de la traverse (10) attachée au premier chariot (21) et la zone de la traverse (10) attachée au deuxième chariot (22).

7. Dispositif de transfert selon l'une quelconque des revendications 1 à 6, dans lequel les supports de pièces (11, 12) sont attachés à la traverse (10) de manière amovible.

8. Installation de presse comprenant au moins une première presse, une deuxième presse et un dispositif de transfert (1) pour transférer des pièces (P) à partir de la première presse (101) vers la deuxième presse (102), **caractérisée en ce que** le dispositif de transfert (1) est un dispositif de transfert selon l'une quelconque des revendications 1 à 7.

9. Installation selon la revendication 8, dans laquelle la structure principale (14) du dispositif de transfert (1) s'étend au moins entre la première presse (101) et la deuxième presse (102).

10. Installation selon la revendication 9, dans laquelle la première sous-structure (14.1) est plus près de la première presse (101) que la deuxième sous-structure (14.2) et la deuxième sous-structure (14.2) est plus près de la deuxième presse (102) que la première sous-structure (14.1).

11. Installation selon la revendication 10, dans laquelle la première sous-structure (14.1) est au moins partiellement intégrée dans la première presse (101) et/ou la deuxième sous-structure (14.2) est au moins partiellement intégrée dans la deuxième presse (102).
